(19) Europäisches Patentamt

European Patent Office

Office européen des brevets

(11) **EP 4 543 018 A1**

(12) **EUROPEAN PATENT APPLICATION**
published in accordance with Art. 153(4) EPC

(43) Date of publication:
**23.04.2025   Bulletin 2025/17**

(21) Application number: **23825955.0**

(22) Date of filing: **27.04.2023**

(51) International Patent Classification (IPC):
**H04N 21/43** (2011.01)

(52) Cooperative Patent Classification (CPC):
**H04N 21/43; H04N 21/431; H04N 21/488**

(86) International application number:
**PCT/CN2023/091203**

(87) International publication number:
**WO 2023/246302 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **20.06.2022   CN 202210698095**

(71) Applicant: **Beijing Zitiao Network Technology Co.,
Ltd.
Beijing 100190 (CN)**

(72) Inventors:
• **PANG, Na
  Beijing 100028 (CN)**
• **YANG, Yiping
  Beijing 100028 (CN)**
• **FANG, Chi
  Beijing 100028 (CN)**

(74) Representative: **Dentons UK and Middle East LLP
One Fleet Place
London EC4M 7WS (GB)**

(54) **SUBTITLE DISPLAY METHOD AND APPARATUS, DEVICE AND MEDIUM**

(57)   Embodiments of the disclosure relate to a method, apparatus, device and medium for subtitle displaying. The method comprises: obtaining a subtitle content corresponding to a currently played virtual reality video frame; determining a target spatial position in a virtual reality panoramic space based on a current line-of-sight direction of a user; and rendering a subtitle layer at the target spatial position based on the subtitle content, and synchronously rendering the subtitle content in the subtitle layer. In embodiments of the present disclosure, after the subtitle content is determined, the position of the subtitle content rendered in the virtual reality space is determined following the line-of-sight direction of the user, so that the viewing experience of the user is improved on the basis of realizing the displaying the subtitle content, and the subtitle content is rendered at a corresponding position, so that a subtitle layer independent of a virtual reality video frame as a carrier for displaying the subtitle content, the displaying distortion of the subtitle content is avoided, and the displaying effect of the subtitle content is improved.

OBTAIN A SUBTITLE CONTENT CORRESPONDING TO A CURRENTLY PLAYED VIRTUAL REALITY VIDEO FRAME — 101

DETERMINE A TARGET SPATIAL POSITION IN A VIRTUAL REALITY PANORAMIC SPACE BASED ON A CURRENT LINE-OF-SIGHT DIRECTION OF A USER — 102

RENDER A SUBTITLE LAYER AT THE TARGET SPATIAL POSITION BASED ON THE SUBTITLE CONTENT, AND SYNCHRONOUSLY RENDER THE SUBTITLE CONTENT IN THE SUBTITLE LAYER — 103

FIG. 1

Processed by Luminess, 75001 PARIS (FR)

EP 4 543 018 A1

## Description

### CROSS REFERENCE

The present disclosure claims the priority to Chinese Patent Application No. 202210698095.3 filed on June 20, 2022, and entitled " Method, Apparatus, Device and Medium for Subtitle Displaying".

### FIELD

Embodiments of the present disclosure relate to the field of virtual reality technology, and in particular to a method, apparatus, device and medium for a subtitle displaying.

### BACKGROUND

Virtual reality technology (Virtual Reality, VR) encompasses computer, electronic information, and simulation technology. The basic implementation method thereof is that a computer simulates a virtual environment to give a person an immersive environmental experience. With the popularization of VR applications, it becomes a common scenario to display subtitles in a virtual reality space in a scenario such as video displaying.

In the related art, for some video sources without subtitle content, a translation function of an audio streams corresponding to the video source is performed based on a tool such as a web page player, the subtitle content obtained by translation is obtained, and the subtitle content obtained by translation is displayed at a fixed position on a corresponding video frame. However, in a VR displaying scenario, in order to achieve a stereoscopic displaying effect, a displaying orientation of a video frame may change, so that the subtitle content fixedly set relative to the video frame may be visually distorted to affect the viewing effect.

### SUMMARY

In order to solve the above technical problem or at least partially solve the above technical problem, the present disclosure provides a method, apparatus, device and medium for a subtitle displaying, which follows the direction of a line-of-sight of a user, determines the position of the subtitle content rendered in the virtual reality space, improves the viewing experience of the user, and renders subtitle content at a corresponding position, so that a subtitle layer independent of a virtual reality video frame as a carrier for displaying the subtitle content. Thus, the displaying distortion of the subtitle content is avoided, and the displaying effect of the subtitle content is improved.

Embodiments of the present disclosure provide a method of a subtitle displaying. The method which comprises: obtaining a subtitle content corresponding to a currently played virtual reality video frame; determining a target spatial position in a virtual reality panoramic space based on a current line-of-sight direction of a user; and rendering a subtitle layer at the target spatial position based on the subtitle content, and synchronously rendering the subtitle content in the subtitle layer.

Embodiments of the present disclosure further provide an apparatus for a subtitle displaying. The apparatus which comprises: an obtaining module configured to obtain a subtitle content corresponding to a currently played virtual reality video frame; a position determination module configured to determine a target spatial position in a virtual reality panoramic space based on a current line-of-sight direction of a user; and a rendering and displaying module configured to render a subtitle layer at the target spatial position based on the subtitle content, and synchronously rendering the subtitle content in the subtitle layer.

Embodiments of the present disclosure further provide an electronic device. The electronic device which comprises: a processor; a memory configured to store executable instructions for the processor; the processor configured to read the executable instructions from the memory and execute the executable instructions to implement the method of a subtitle displaying according to embodiments of the present disclosure.

Embodiments of the present disclosure further provide a computer readable storage medium. The storage medium stores a computer program. The computer program is configured to execute the method of a subtitle displaying according to embodiments of the present disclosure.

Compared with the prior art, the technical solutions provided by embodiments of the present disclosure have the following advantages:

Embodiments of the present disclosure provide a solution for displaying subtitle, a subtitle content corresponding to a currently played virtual reality video frame is obtained, a target spatial position is determined in a virtual reality panoramic space based on a current line-of-sight direction of a user, a subtitle layer is rendered in the target spatial position based on the subtitle content, and the subtitle content is synchronously rendered in the subtitle layer. After the subtitle content is determined, the position of the subtitle content rendered in the virtual reality space is determined following the line-of-sight direction of the user, so that the viewing experience of the user is improved on the basis of realizing the displaying the subtitle content, and the subtitle content is rendered at a corresponding position, so that a subtitle layer independent of a virtual reality video frame as a carrier for displaying the subtitle content, the displaying distortion of the subtitle content is avoided, and the displaying effect of the subtitle content is improved.

**BRIEF DESCRIPTION OF THE DRAWINGS**

The above and other features, advantages, and aspects of various embodiments of the present disclosure will become more apparent in conjunction with the accompanying drawings and with reference to the following detailed description. The same or like reference numerals represent the same or like elements throughout the drawings, it should be understood that the drawings are illustrative and that the elements and primaries are not necessarily drawn to scale.

FIG. 1 is a schematic flowchart diagram of a method for a subtitle displaying according to an embodiment of the present disclosure;

FIG. 2 is a schematic diagram of a displaying scenario of a subtitle according to an embodiment of the present disclosure;

FIG. 3 is a schematic diagram of another displaying scenario of a subtitle according to an embodiment of the present disclosure;

FIG. 4 is a schematic diagram of another displaying scenario of a subtitle according to an embodiment of the present disclosure;

FIG. 5 is a schematic diagram of another displaying scenario of a subtitle according to an embodiment of the present disclosure;

FIG. 6 is a schematic diagram of another displaying scenario of a subtitle according to an embodiment of the present disclosure;

FIG. 7 is a schematic flowchart diagram of another method of a subtitle displaying according to an embodiment of the present disclosure;

FIG. 8 is a schematic diagram of another displaying scenario of a subtitle according to an embodiment of the present disclosure;

FIG. 9 is a schematic flowchart diagram of another method of a subtitle displaying according to an embodiment of the present disclosure;

FIG. 10 is a schematic diagram of another displaying scenario of a subtitle according to an embodiment of the present disclosure;

FIG. 11 is a schematic diagram of another displaying scenario of a subtitle according to an embodiment of the present disclosure;

FIG. 12 is a schematic diagram of another displaying scenario of a subtitle according to an embodiment of the present disclosure;

FIG. 13 is a schematic flowchart diagram of another method of a subtitle displaying according to an embodiment of the present disclosure;

FIG. 14A is a schematic diagram of another displaying scenario of a subtitle according to an embodiment of the present disclosure;

FIG. 14B is a schematic diagram of another displaying scenario of a subtitle according to an embodiment of the present disclosure;

FIG. 15 is a schematic diagram of another displaying scenario of a subtitle according to an embodiment of the present disclosure;

FIG. 16 is a schematic structural diagram of an apparatus for a subtitle displaying according to an embodiment of the present disclosure; and

FIG. 17 is a schematic structural diagram of an electronic device according to an embodiment of the present disclosure.

**DETAILED DESCRIPTION**

Embodiments of the present disclosure will be described in more detail below with reference to the accompanying drawings. Although certain embodiments of the present disclosure are shown in the drawings, it should be understood that the present disclosure may be implemented in various forms and should not be construed as being limited to embodiments set forth herein, but rather these embodiments are provided for a thorough and complete understanding of the present disclosure. It should be understood that the drawings and embodiments of the present disclosure are only for illustrative purposes and are not intended to limit the protection scope of the present disclosure.
It should be understood that the steps described in the method embodiments of the present disclosure may be executed in different orders, and/or executed in parallel. Furthermore, the method embodiments may include additional steps and/or omit the steps illustrated performing. The scope of the present disclosure is not limited in this respect.
The term "including", and its variations thereof used herein are open-ended inclusion, that is "including but not limited to". The term "based on" is "based at least in part on". The term "one embodiment" means "at least one embodiment"; the term "another embodiment" means "at least one further embodiment"; The term "some embodiments" means "at least some embodiments". The relevant definitions of other terms will be given in the following description.
It should be noted that concepts such as "first", "second" and the like mentioned in the present disclosure are only used to distinguish different apparatuses, modules, or units, but are not used to limit the sequence or dependency of functions performed by these apparatuses, modules, or units.
It should be noted that the modifications of "one" and "a plurality of" mentioned in the present disclosure are illustrative rather than restrictive, and those skilled in the art should understand that they should be understood as "one or more" unless the context clearly indicates otherwise.
The names of messages or information interacted between a plurality of devices in embodiments of the present disclosure are only for illustrative purposes, and are not intended to limit the scope of these messages or information.
In order to solve the above problem, embodiments of the present disclosure provide a method of a subtitle displaying. In the method, a fixed mode of subtitle content displaying is no longer relied upon, but a position fixed relationship between subtitle content and screen content is lifted, and a displaying position of the subtitle content is adaptively adjusted following a line-of-sight direction of a user, thereby the subtitle content is avoided from being visually distorted, and the visual viewing experience of the user is improved.
The method is described below with reference to specific embodiments.

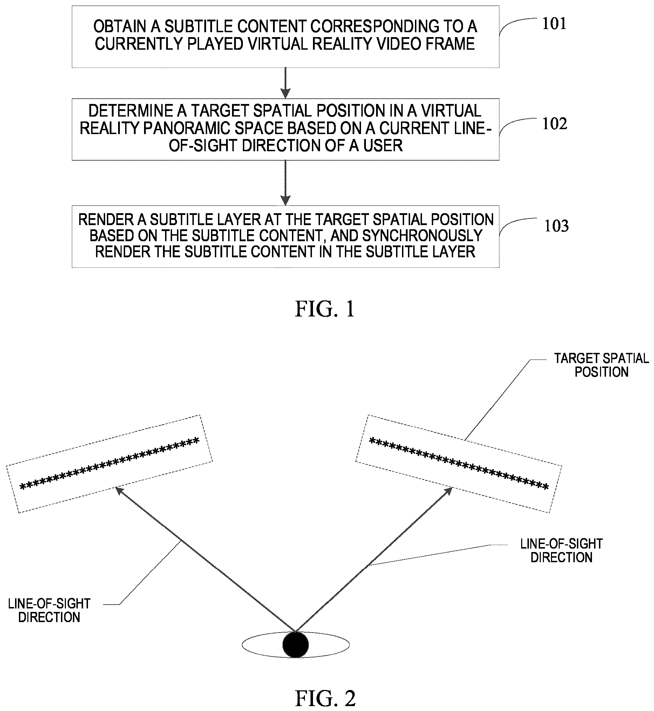

FIG. 1 is a schematic flowchart diagram of a method for a subtitle displaying according to an embodiment of the present disclosure. The method may be executed by an apparatus for a subtitle displaying. The apparatus may be implemented by software and/or hardware and may generally be integrated in an electronic device. As shown in FIG. 1, the method includes the following steps.
In Step 101: obtain a subtitle content corresponding to a currently played virtual reality video frame.
In the embodiment, for some virtual reality video frames without subtitles, corresponding subtitle content may be obtained based on different manners.
In some possible embodiments, an audio stream corresponding to a currently played virtual reality video frame is determined, voice recognition processing is performed on the audio stream to obtain a subtitle content, for example, timestamp information corresponding to each audio stream is obtained, and the subtitle content corresponding to the virtual reality video frame is matched based on the timestamp information and the timestamp information of the virtual video frame.
In other possible embodiments, a correspondence between each virtual reality video frame and the corresponding subtitle content may be predetermined identified and constructed, and the correspondence is stored in a corresponding predetermined database, so that the subtitle content corresponding to the currently played virtual reality video frame may be obtained by querying the predetermined database.
In Step 102: determine a target spatial position in a virtual reality panoramic space based on a current line-of-sight direction of a user.
In the embodiment, in order to avoid distortion of subtitle content displaying, a virtual video frame is no longer used as a basis for determining a subtitle content displaying position, but a target spatial position is determined in a virtual reality panoramic space according to a current line-of-sight direction of a user.

That is, the target spatial position is consistent with the current line-of-sight direction of the user, for example, as shown in FIG. 2, the target spatial position is located in the current line-of-sight direction of the user, so that the consistency between the target spatial position in the line-of-sight direction and the line-of-sight direction can be guaranteed, and technical support is further provided for the displaying effect of the subtitle content.

Among them, a manner of determining the target spatial position in the virtual reality panoramic space according to the current line-of-sight direction of the user, may refer to subsequent embodiments, and details are not repeatedly described herein.

In Step 103: render a subtitle layer at the target spatial position based on the subtitle content, and synchronously render the subtitle content in the subtitle layer.

In an embodiment of the present disclosure, after a target spatial position is determined, a subtitle layer is rendered at the target spatial position, and subtitle content is synchronously rendered in the subtitle layer. For example, with reference to FIG. 2, if a line-of-sight direction of a user changes horizontally, the subtitle layer follows a change in the line-of-sight direction, and the subtitle layer is displayed at a spatial position in the line-of-sight direction, where the subtitle content is synchronously rendered at the subtitle layer. Because the subtitle layer is in the line-of-sight direction of the user, it ensures that the subtitle content can be presented to the user without distortion, and the visual display effect is ensured.

In the embodiment, the subtitle content is independently rendered at a subtitle layer independent of the virtual reality video frame, thereby the displaying distortion of the subtitle content is avoided. In addition, the subtitle layer renders according to the subtitle content, so that the visual sense of science and technology is stronger, thereby the visual viewing experience of a user is improved.

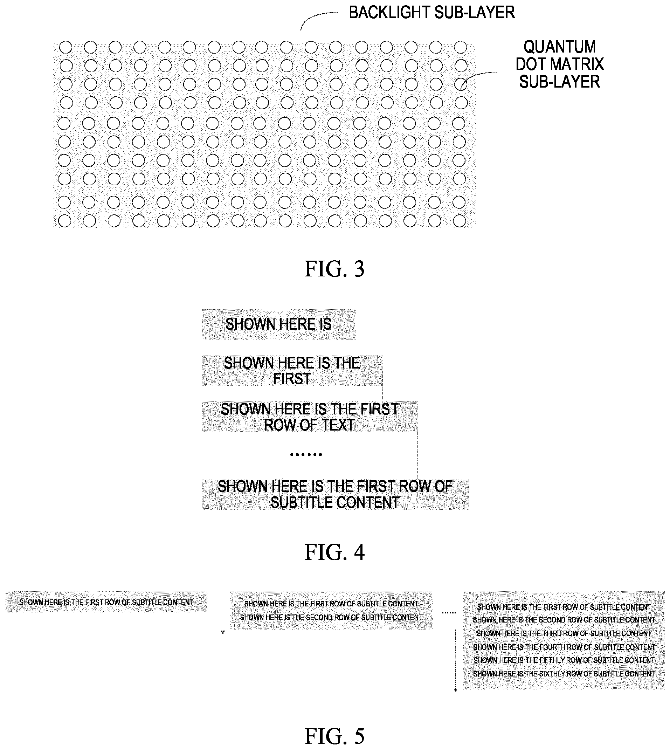

In an embodiment of the present disclosure, in order to further improve the intelligence of the subtitle layer, background addition displaying processing may also be performed on the subtitle layer, a background effect is added to a subtitle layer to improve the displaying intelligence. In some possible embodiments, in order to avoid occlusion of a virtual reality video frame, the subtitle layer may be further processed possible treated as a higher transparency layer, such as in some possible embodiments, the subtitle layer is a backlight sub-layer and a quantum dot matrix sub-layer, where the quantum color of the quantum dot matrix sub-layer may be any color, such as blue, the quantum dot matrix can be displayed in a gradient form, and can also be displayed in a uniform brightness. As shown in FIG. 3, the subtitle layer is formed by superposing a backlight sub-layer and a quantum dot matrix sub-layer, that may visually give the user a stronger sense of technology. In other possible embodiments, a light animation may be rendered in the subtitle layer, such as an auroral animation, such as a white light circulation animation, etc., which will not be described in detail herein. By adding the light animation, the technical feeling of displaying is improved.

In an actual implementation process, in order to further improve a visual displaying effect, the subtitle layer may also be dynamically rendered according to the subtitle content.

In an embodiment of the present disclosure, the displaying quantity of subtitle contents is obtained, and a subtitle layer that matches the displaying quantity is rendered, thereby the effect of dynamically displaying the subtitle layer along with the change of the displaying quantity of the captions is realized.

In some possible embodiments, the displaying quantity of the subtitle content is obtained, and the subtitle real-time width and the subtitle real-time height are determined according to the displaying quantity, the predetermined unit subtitle width, and the predetermined unit subtitle height. Where the displaying quantity of subtitle content refers to the quantity of all subtitle content displayed in the current virtual reality video frame. For example, if the subtitle content is obtained through speech recognition, one or more words and a displaying event for triggering the subtitle content may be obtained through identification or reading, so that the displaying quantity of subtitle content changes. The predetermined unit subtitle width refers to a pre-specified width of each subtitle content, and the predetermined unit subtitle height refers to a pre-specified height of each subtitle content.

In the embodiment, a subtitle real-time height and a subtitle real-time width are determined so as to dynamically render a subtitle layer based on the subtitle real-time height and the subtitle real-time width.

In some possible embodiments, the predetermined database may be queried based on the displaying quantity, the predetermined unit subtitle width, and the predetermined unit subtitle height to obtain the subtitle real-time width and the subtitle real-time height.

In other possible embodiments, it may be determined whether the displaying quantity is greater than a predetermined subtitle quantity threshold in the width direction, where the predetermined subtitle quantity threshold may be understood as the pre-specified maximum quantity of subtitle contents displayed in each row, if the displaying quantity is greater than a predetermined subtitle quantity threshold, that the subtitle content needs row replacement processing, and therefore, the subtitle real-time width is determined according to the predetermined subtitle quantity threshold and the unit subtitle width, For example, a product of the predetermined subtitle quantity threshold and the unit subtitle width is calculated to determine the subtitle real-time width.

Similarly, the subtitle row number can be determined according to a predetermined subtitle quantity threshold and the displaying quantity, for example, a ratio of the displaying quantity to the predetermined subtitle quantity threshold is calculated, and a minimum integer greater than or equal to the ratio is determined as the subtitle row number; furthermore, the subtitle real-time height is determined according to the subtitle row number and the unit subtitle height, for example, the subtitle real-time height is determined by calculating the product of the subtitle row number and the unit subtitle height.

In the embodiment, if the displaying quantity is not greater than the predetermined subtitle quantity threshold, that is, the subtitle displaying quantity is less than one row, the subtitle real-time width is determined according to the unit subtitle width and the displaying quantity, that is, the product of the unit subtitle width and the displaying quantity is calculated to determine the subtitle real-time width, and the unit subtitle height is determined to be the subtitle real-time height.

Further, after the subtitle real-time width and the subtitle real-time height are determined, if the subtitle real-time width has changed, in response to a change in the width of the subtitle real-time width, according to the layer width of the unit subtitle and the subtitle real-time width, a real-time subtitle layer width that matches the subtitle contents is rendered, where the layer width of the unit subtitle is a unit width increased by the subtitle layer when each unit subtitle is increased in the width direction.

Similarly, after the subtitle real-time width and the subtitle real-time height are determined, if the subtitle real-time height is changed, in response to the change of the subtitle real-time height, a real-time subtitle layer height that matches the subtitle content is rendered according to the predetermined layer height of the unit subtitle and the subtitle real-time height. Where the layer height of the unit subtitle is a unit height by the subtitle layer when each unit subtitle is increased in height direction. That is, the subtitle layer may be extended horizontally and vertically along with the subtitle content.

That is, in the embodiment, as shown in FIG. 4, when the width of the real-time displayed subtitle content is less than or equal to the predetermined subtitle quantity threshold, a subtitle layer width is determined according to the subtitle real-time width displayed in real-time(in the figure, the subtitle content is "shown here is the * row of the subtitle content", the subtitle layer is graduated brightness) , for example, each time the one or more subtitle contents are newly added and displayed in real-time, the corresponding subtitle contents are displayed according to a unit subtitle width, Meanwhile, the subtitle layer is extended according to the layer width of the unit subtitle. Generally, the unit subtitle width is less than the layer width of the unit subtitle, so as to ensure that the subtitle content can be visually wrapped by the subtitle layer. Thereby, it is realized visually to follow the displaying subtitle background in the width direction according to the displaying content of the subtitle.

In an embodiment of the present disclosure, as shown in FIG. 5, if the width of the subtitle content displayed in real-time is greater than the predetermined subtitle quantity threshold, row replacement displaying on the subtitle content is performed, and the real-time subtitle layer height that matches the subtitle content is rendered according to a height change of the subtitle real-time height, For example, when the real-time inputted subtitle width is greater than the predetermined maximum row width of the subtitle, that is, when row replacement displaying is required, each time one or more subtitle contents are newly added and displayed in real-time, the corresponding subtitle contents are displayed according to the unit subtitle height, Meanwhile, the displaying height of the subtitle layer is extended according to the layer height of the unit subtitle, and generally, the unit subtitle height is smaller than the layer height of the unit subtitle, so as to ensure that the subtitle content can be visually wrapped by the subtitle layer.

Therefore, the effect of a scrolling displaying is visually realized by following the displayed subtitle layer according to the display content of the subtitle in the height direction. With continued reference to FIG. 5, as the subtitle content increases from the first row to the sixth row, the height of the subtitle layer gradually expands downwards, and the effect of the scrolling displaying is formed. Where, in an actual execution process, the layer height of the unit subtitle corresponding to a different row may be the same or different, for example, it may be specified that the layer height of the first row of unit subtitle is 72, and the layer height of the second row of unit subtitle is 100, the layer height of the third row of unit subtitle is 120, the layer height of the fourth row of unit subtitle is 132, and the layer height of the fifth row of unit subtitle is 156, the layer height of the sixth row of unit subtitle is 180, etc.

In an actual execution process, if the displaying quantity is large, for example, the displaying quantity is greater than a predetermined value, in order to avoid occlusion of a virtual reality video frame, the subtitle content may also be displayed by reducing a predetermined unit subtitle width and/or a predetermined unit subtitle height.

Alternatively, it may be determined whether the subtitle row number obtained through current calculation is greater than a predetermined threshold of the row number, where, if the row number is greater than the predetermined threshold of the row number, the subtitle content of the predetermined threshold of the row number is displayed first, and other remaining subtitle contents are scrolled and displayed, For example, if the predetermined threshold of the row number is 6 rows, but the calculated subtitle row number is 7, the first 6 rows of subtitle content may be displayed first, after a predetermined duration of displaying, the subtitle content of the 1st row is no longer displayed, the subtitle content of rows 2-6 is scrolled upwards, and the original subtitle content of row 7 is displayed in row 6, Alternatively, after the predetermined duration is displayed, the subtitle contents of the 1st to 6th rows may not be displayed any more, and only the original subtitle content of the 7th row is displayed.

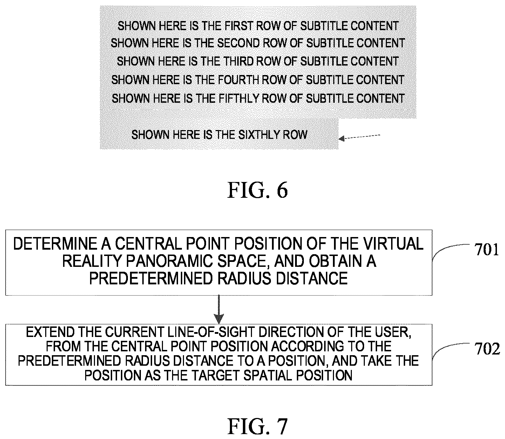

In addition, when the above control subtitle layer is dynamically rendered according to the subtitle content, and when the subtitle content of the last row rendered does not reach the predetermined subtitle quantity threshold, as shown in FIG. 5, a whole row of layer may be rendered according to a predetermined caption quantity threshold, or as shown in FIG. 6, a subtitle layer width of the last row is determined according to the subtitle content quantity of the last row and a predetermined unit subtitle width, In this way, the intelligence level of the subtitle layer following rendering can be further improved.

In conclusion, the method of a subtitle displaying according to the embodiments of the present disclosure obtain a subtitle content corresponding to a currently played virtual reality video frame; determine a target spatial position in a virtual reality panoramic space based on a current line-of-sight direction of a user; and render a subtitle layer at the target spatial position based on the subtitle content, and synchronously render the subtitle content in the subtitle layer. After the subtitle content is determined, the position of the subtitle content rendered in the virtual reality space is determined following the line-of-sight direction of the user, so that the viewing experience of the user is improved on the basis of realizing the subtitle content displaying, and the subtitle content is rendered at a corresponding position, and the subtitle layer independent of a virtual reality video frame as the carrier for displaying subtitle content, so that the displaying distortion of the subtitle content is avoided, The displaying effect of the subtitle content is improved.

In different application scenarios, the manner of determining the target spatial position in the virtual reality panoramic space according to the current line-of-sight direction of the user is different, and examples is as follows:

In an embodiment of the present disclosure, as shown in FIG. 7, the determining the target spatial position in the virtual reality panoramic space based on the current line-of-sight direction of the user includes the following steps.

In step 701: determine a central point position of the virtual reality panoramic space, and obtain a predetermined radius distance.

In the embodiment, a central point position of the virtual reality panoramic space is determined, where the central point position is located at a center of the virtual reality panoramic space, and the central point position is related to a shape of the virtual reality panoramic space. after the central point position of the virtual reality panoramic space is determined, a predetermined radius distance is obtained, where the predetermined radius distance may be set predetermined according to the size of the virtual reality panoramic space, the length from the predetermined radius distance to the central point position does not exceed the length from the central point position in the virtual reality panoramic space to the surface of the virtual reality panoramic space, so that, it is ensured that the displayed subtitle layer is located in front of the virtual reality video frame, a barrier is formed, and the technical feeling of the subtitle layer displaying is improved.

In step 702: extend the current line-of-sight direction of the user, from the central point position according to the predetermined radius distance to a position, and take the position as the target spatial position.

In the embodiment, because the length from the predetermined radius distance to the central point position does not exceed the length from the central point position in the virtual reality panoramic space to the surface of the virtual reality panoramic space, Therefore, the current line-of-sight direction of the user, from the central point position according to the predetermined radius distance to a position is extended, and take the position as the target spatial position, On the one hand, it can be ensured that a target spatial position is inside a virtual space, thereby ensuring a display effect; on the other hand, It can be guaranteed that the target spatial position is consistent with the line-of-sight direction of the user, so that the subtitle contents displayed at the target spatial position are consistent with the line-of-sight direction of the user, and it is ensured that the user can clearly view the subtitle content, thereby improving the viewing experience.

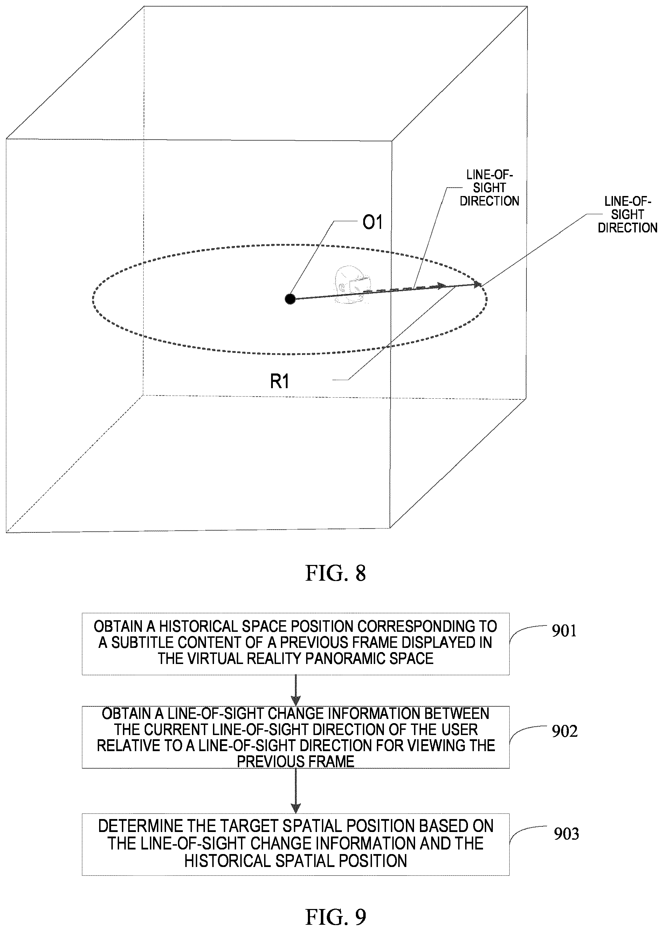

For example, as shown in FIG. 8, the virtual reality panoramic space is a 'box-shaped' cubic space, the predetermined radius distance is R1, and the center point position of the virtual reality panoramic space is O1, and after the current line-of-sight direction of the user is determined, a position that extends to the predetermined radius distance directly according to the current line-of-sight direction of the user is used as the target spatial position.

In an embodiment of the present disclosure, as shown in FIG. 9, the determining the target spatial position in the virtual reality panoramic space based on the current line-of-sight direction of the user includes the following steps.

In step 901: obtain a historical space position corresponding to a subtitle content of a previous frame displayed in the virtual reality panoramic space.

In the embodiment, a historical space position corresponding to a subtitle content of a previous frame displayed in the virtual reality panoramic space is obtained, and the historical space position is determined according to a line-of-sight direction of a user under the previous frame of subtitle.

In step 902: obtain a line-of-sight change information between the current line-of-sight direction of the user relative to a line-of-sight direction for viewing the previous frame.

Where the line-of-sight change information is used to indicate a change of an angle of a current line-of-sight direction of the user relative to a line-of-sight direction of observing the previous frame, for example, the line-of-sight change information may include a change direction and a change angle of the current line-of-sight direction of the user relative to the line-of-sight direction of observing the previous frame.

In an embodiment of the present disclosure, a horizontal axis rotation angle of a camera in a virtual reality device worn by the user relative to the previous frame in a horizontal direction is obtained, the horizontal axis rotation angle is determined as the change information of a horizontal line-of-sight direction from a horizontal line-of-sight direction in which a user views a previous frame to a horizontal line-of-sight direction in which the user views a current frame, In the embodiment, since the line-of-sight change information includes the change information of the horizontal line-of-sight direction, it can be ensured that when the user watches the video while rotating left and right, the target spatial position may follow the line-of-sight direction of the user, which further ensures that the subtitle content displayed at the target spatial position is consistent with the line-of-sight direction of the user.

In step 903: determine the target spatial position based on the line-of-sight change information and the historical spatial position.

In the embodiment, after the line-of-sight change information is determined, the target spatial position may be determined according to the line-of-sight change information and the historical spatial position, for example, the historical spatial position may be moved according to the line-of-sight change information to determine the target spatial position.

In the embodiment, it should be emphasized that the target spatial position is determined only according to the line-of-sight change information between the current line of line-of-sight direction of the user and the line-of-sight direction of observing the previous frame, and the change of the position of the current user in the virtual reality space and the position of the previous frame of user in the virtual space is not considered. Whether the position of the current user in virtual reality space is closer to the surface of the virtual space or further away from the surface of the virtual space relative to the position of the user in virtual space in the previous frame does not affect the determination of the target spatial position, the target spatial position is only related to the line-of-sight change information between the current line-of-sight direction of the user and the line-of-sight direction of viewing the previous frame, thereby, visually, the user will not feel that the displayed subtitle content has a fixed display distance from the user's eyes, which further ensures the visual effect of the user.

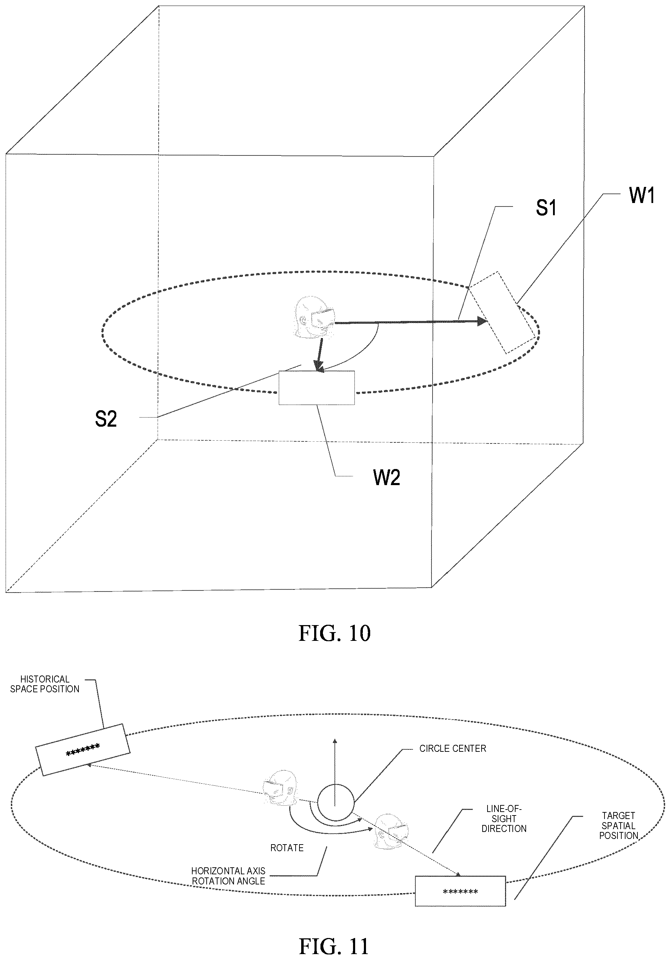

For example, as shown in FIG. 10, the virtual reality panoramic space is a 'box-shaped' cubic space, and the historical spatial position corresponding to the subtitle content of the previous frame displayed in the virtual reality panoramic space is W1, the line-of-sight change information between the current line-of-sight S2 of a user and a line-of-sight S1 relative to the viewing a previous frame is obtained as shown in the drawing, Then, the movement of the historical space positions is controlled according to the line-of-sight change information to determine the moved position W2 as the target spatial position.

It should be noted that in different application scenarios, the manner of determining the target spatial position according to the line-of-sight change information and the historical spatial position is different, and examples are as follows:

In an embodiment of the present disclosure, a predetermined circle center position preset in a virtual reality panoramic space is obtained, where the circle center position is generally set at a center position of the virtual reality space as a circle center, so as to ensure that the subtitle contents can be displayed in the virtual reality space when the subtitle is enabled to surround and follow as a circle center.

In the embodiment, an initial position of a virtual reality device in a virtual reality panoramic space can be obtained, where the initial position is a central point position in the virtual reality panoramic space; the initial position is taken as a central point position in the virtual reality panoramic space to establish the virtual reality panoramic space; and furthermore, the central point position in the virtual reality panoramic space is set as a circle center position.

In an embodiment of the present disclosure, although the initial position of the virtual reality device in the virtual reality panoramic space is taken as the circle center position, However, in an actual execution process, when the virtual reality device moves in the virtual reality panoramic space, the center point position continues to be set as the circle center position, and the VR head-mounted display device of the user is not continuously used as the circle center position in the virtual reality panoramic space. Visually, parameters irrelevant to the line-of-sight direction, such as the movement distance of the VR head-mounted display device, are stripped away from the displayed position of the subtitle content. The visual displaying effect is improved, and when subtitle content is always associated with the movement distance of a VR head-mounted display device, etc., the subtitle content is always linked with the VR head-mounted display device, which affects visual experience of a user.

Further, after the circle center position is obtained, the horizontal axis rotation angle is taken as the rotation angle of the circle center from the previous frame to the current frame, and the historical spatial position of the subtitle contents of the previous frame relative to the circle center is determined, and then the target spatial position is determined according to the circle center position, the historical spatial position and the circle canter rotation angle.

For example, as shown in FIG. 11, the horizontal axis rotation angle of the camera in the virtual reality device worn by the user in a horizontal direction relative to the previous frame is obtained. After determining the horizontal axis rotation angle of the current video frame relative to the previous frame, the predetermined circle center position in the virtual reality panoramic space is obtained, and the horizontal axis rotation angle is then set as a circle center rotation angle of a rotating root node, further, the historical spatial position of the subtitle content relative to the circle center from the previous frame is determined, based on the circle center rotation angle is rotated, driving the subtitle content to take a circle center position as a rotation center, and rotating the subtitle content from a historical spatial position to a target spatial position consistent with the line-of-sight direction of the user, Thus, the displaying effect of the subtitle content subsequently displayed at the target spatial position is ensured.

In some possible embodiments, a neural network model may be trained in advance according to sample data, the neural network model inputs the circle center position, a historical spatial position, and a horizontal axis rotation angle, to predict the target spatial position in the virtual reality panoramic space corresponding to the current line-of-sight direction.

In other possible embodiments, a predetermined algorithm may be used to calculate and obtain the target spatial position corresponding to the current line-of-sight direction in the virtual reality panoramic space, where the predetermined algorithm may be shown in the following formula (1), where x, y, and z are coordinates of a historical spatial position on three coordinate axes respectively, x1, y1, z1 being the coordinates of the target spatial position on three coordinate axes respectively, $\theta$ being the circle center rotation angle, Tx, Ty, Tz are the coordinates of the circle center position on three coordinate axes, respectively.

$$\begin{bmatrix} x1 \\ y1 \\ z1 \\ 1 \end{bmatrix} = \begin{bmatrix} \cos\theta & 0 & \sin\theta & Tx \\ 0 & 1 & 0 & Ty \\ -\sin\theta & 0 & \cos\theta & Tz \\ 0 & 0 & 0 & 1 \end{bmatrix} \begin{bmatrix} x \\ y \\ z \\ 1 \end{bmatrix} \qquad \text{formula (1)}$$

where, if the first frame of subtitle content is currently displayed for the first time, the predetermined radius distance may be obtained; an initial spatial position of the subtitle content of the initial frame relative to a circle center is determined according to a circle center position, the radius distance, and an initial line-of-sight direction of the user; and the initial spatial position is used as a rendering position of the subtitle content of the first frame.

In conclusion, the method for subtitle displaying in the disclosed embodiment can flexibly determine the target spatial position for rendering subtitle content within the virtual reality panoramic space according to scene requirements, this ensures that the target spatial position follows a current line-of-sight direction of a user, achieving movement of the subtitle content following the current line-of-sight direction of the user, and ensuring a visual displaying effect of the subtitle content.

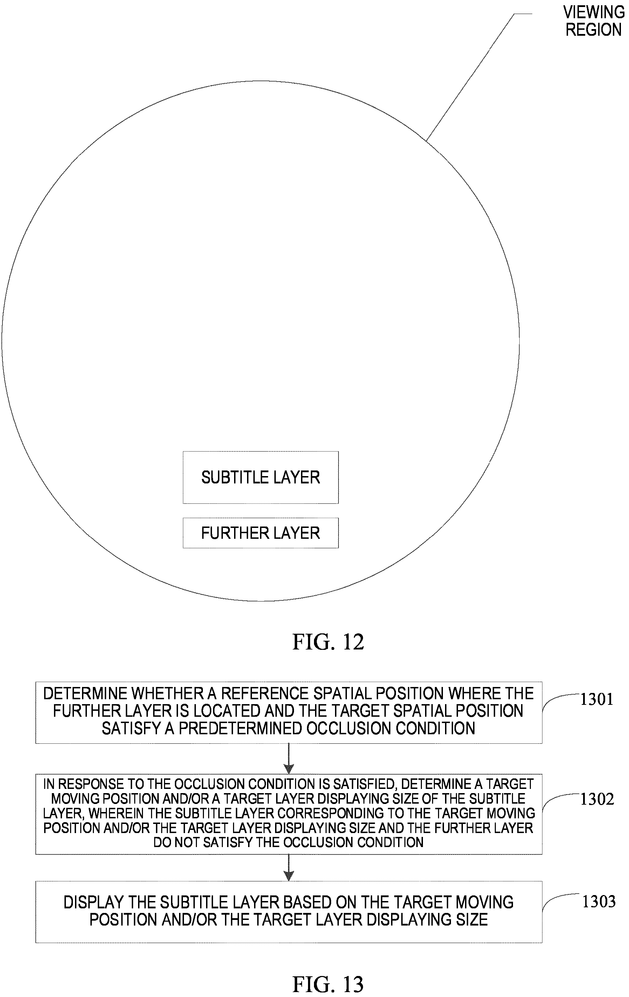

Based on the above embodiment, the subtitle layer is displayed independently of the virtual reality video frame as a layer. Therefore, other displayed layers may be blocked, for example, as shown in FIG. 12, if the user executes the display operation of playback panel layer while viewing a video, the aforementioned principle of determining a target spatial position will be used in the line-of-sight direction of the user to determine the displaying position of the playback panel layer and display it. Thus, this may cause the playback panel layer to be obscured, making it difficult for the user to perform playback control operations on the playback panel.

Therefore, in order to avoid the above problem, in an embodiment of the present disclosure, if it is detected that further layers are displayed in the virtual reality panoramic space, displaying state information of the further layers is identified, and the displaying state information of the subtitle layer is adjusted according to the displaying state information of the further layers, so as to ensure that the user can clearly view the subtitle content and further layers such as the playback panel layer.

In an embodiment of the present disclosure, the displaying state information includes a space position for display. The method includes: in the embodiment, as shown in FIG. 13, the displaying state information of the subtitle layer is adjusted based on the displaying state information of the further layer, which includes the following steps.

In step 1301, determine whether a reference spatial position where the further layer is located and the target spatial position satisfy a predetermined occlusion condition.

In this embodiment, if it is detected that further layer is displayed in the virtual reality panoramic space, the further layer may include any layer that is displayed along the direction of the user, For example, a playback control panel layer, etc., usually further layers are closer to a virtual reality video frame relative to a subtitle picture layer, to determine whether further layers and subtitle layers satisfy a predetermined occlusion condition, that is, determining whether the subtitle layer blocks further layers.

It should be noted that, in different application scenarios, the manner for determining whether the reference spatial position of further layer and a target spatial position meets a predetermined occlusion condition is different, and examples are as follows:

In some possible implementations, a first central point position of the further layer on a plane perpendicular to the line-of-sight direction is identified based on the reference spatial position, a second central point position of the subtitle layer on the plane perpendicular to the line-of-sight direction is identified based on the target spatial position, where A plane perpendicular to the line-of- sight direction may be understood as a plane that is viewed directly opposite to the line-of-sight of the user, for example, if the coordinate system is established by using the line-of-sight direction of the user as the Z axis, a plane perpendicular to the line-of-sight direction may be understood as an XY plane.

In this embodiment, it is determined whether a position difference value between the first central point position and the second central point position is less than a predetermined distance threshold, wherein if the position difference value is less than the predetermined distance threshold, it is determined that the coincidence degrees between further layers and a subtitle layer are relatively high, the subtitle layer may be coincident with further layers, and further layers are blocked; therefore, it is determined that a predetermined occlusion condition is satisfied.

In other possible embodiments, the overlapping region area between the subtitle layer and further layers is determined on a plane perpendicular to the line-of-sight based on the reference and target spatial positions, for example, the overlapping region area can be determined according to the size of the overlapping region, For another example, the overlapping region area can be determined according to the number of pixels in the overlapping region, and the area ratio can be calculated between the overlapping region area and the layer area of the further layers, it is determined whether an area ratio value is greater than a predetermined area ratio threshold, where if the area ratio value is greater than the predetermined area ratio threshold, It is determined that a predetermined occlusion condition is satisfied.

Of course, in an embodiment of the present disclosure, it is not necessary to determine whether all further layers are occluded, For some layers that can be occluded, such as the advertisement layer, it is not necessary to judge whether the subtitle layer causes occlusion, Therefore, in the embodiment, the layer level of further layers may also be determined, and it is determined that the image layer level is higher than a predetermined level threshold, The layer level may be obtained by identifying the type of the current further layers and then querying a predetermined correspondence relationship.

Step 1302: if the occlusion condition being satisfied, determining a target moving position and/or a target layer displaying size of the subtitle layer, wherein the subtitle layer corresponding to the target moving position and/or the target layer displaying size and the further layer do not satisfy the occlusion condition.

In an embodiment of the present disclosure, if the predetermined occlusion condition is satisfied, the target moving position of a subtitle layer is determined, where the subtitle layer in the target moving position and further layers do not satisfy the occlusion condition.

In an actual execution process, the target moving position may be any position that is as close to the direction of the line-of-sight of the user as possible but does not cause occlusion of further layers.

In an embodiment of the present disclosure, a first height information for an upper edge line of the further layer is determined, and the first height information may be understood as a Y-axis coordinate value, etc., determining a second height information for a lower edge line of the subtitle layer based on the first height information, wherein the second height information is greater than or equal to the first height information, That is, the second height information may be slightly higher than the first height information or just above the first height information, Then, the target moving position is determined based on the second height information.

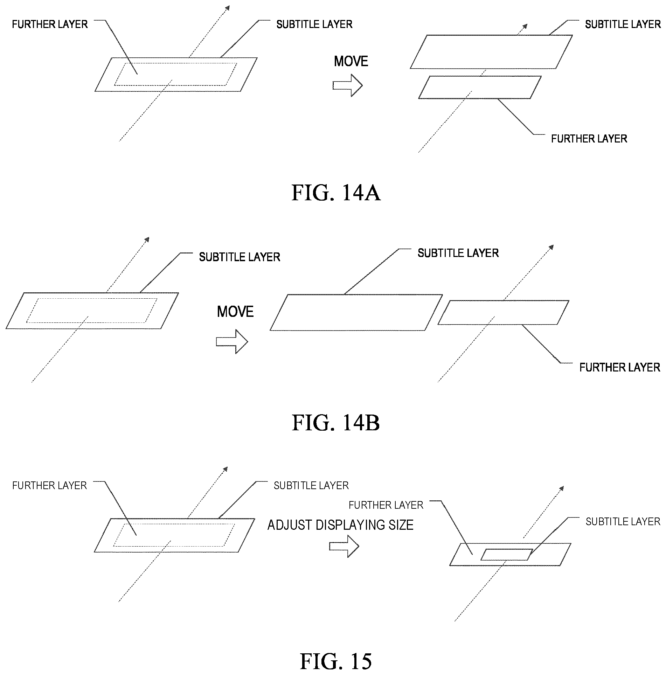

For example, as shown in FIG. 14A, if the further layer and the subtitle layer are both rectangles, when the further layer and the subtitle layer satisfy a occlusion condition, as shown in FIG. 14A, the first height information for an upper edge line of the further layer may be determined, and the subtitle layer is translated upwards, so that the subtitle layer moves from being located in front of the further layer to being located above the further layer, which avoids occlusion of the further layer.

In another embodiment of the present disclosure, a first width information for a left edge line of the further layer is determined, the first width information may be understood as an X-axis coordinate value, etc. , and a second width information for a right edge line of the subtitle layer is determined according to the first width information, where the second width information is smaller than or equal to the first width information, that is, the second width information may be slightly smaller than the first width information or just above the first width information, Then, the target moving position is determined based on the second width information.

For example, as shown in FIG. 14B, if the further layer and the subtitle layer are both rectangles, when the further layer and the subtitle layer satisfy a occlusion condition, as shown in FIG. 14B, a first width information for a left edge line of the further layer may be determined, and the subtitle layer is translated towards the left, so that the subtitle layer moves from a front position of the further layer to a left position of the further layer, which avoids occlusion of the further layer.

Certainly, in the above embodiment, controlling the subtitle layer to move upward or to move to the left is only a possible example, and during actual execution, the subtitle layer may also be controlled to move below or to the right relative to further layers, and the moving principle of the subtitle layer is similar, which is not listed one by one herein.

In another embodiment of the present disclosure, if the occlusion condition is satisfied, the displaying size of the subtitle layer is determined.

In the embodiment, a reference displaying size of the further layer can be determined based on the reference spatial position, and the target layer displaying size of the subtitle layer can be determined based on the reference displaying size. For example, a product of a reference displaying size and a predetermined reduction ratio is calculated, where the predetermined reduction ratio is less than 1, and the target layer displaying size is determined according to a product value; For another example, a size difference between the reference displaying size and the initial displaying size of the subtitle layer is calculated, and a predetermined correspondence is queried according to the size difference value to determine a scaling ratio, where the larger the size difference value, the smaller the scaling ratio, and the initial displaying size is scaled according to the scaling ratio to obtain a target layer displaying size.

In the embodiment of the present disclosure, as shown in FIG. 15, if the further layer and the subtitle layer are both rectangles, when the further layer and the subtitle layer satisfy the occlusion condition, the target layer displaying size of the subtitle layer may be determined according to the reference displaying size of the further layer, and the subtitle layer of the target layer displaying size has a small occlusion area for the further layer, thereby not affecting the viewing of the further layer.

In another embodiment of the present disclosure, the target moving position of the subtitle layer and the target layer displaying size may also be determined at the same time, that is, in conjunction with the adjustment of position and size to avoid occlusion of further layer.

In step 1303, display the subtitle layer based on the target moving position and/or the target layer displaying size.

In the embodiment, a subtitle layer is controlled to move to a target moving position and/or a target layer displaying size is displayed, where the subtitle content rendered on the subtitle layer is also synchronously moved, and a user can not only view the subtitle content but also view the content of the further layer.

Considering that further layer may all be temporarily displayed layers, in order to further improve the visual displaying effect, in an embodiment of the present disclosure, in response to a detection of an instruction for disabling displaying of the further layer, controlling the subtitle layer to move to the target spatial position for display.

In an embodiment of the present disclosure, the above displaying state information may also include a display time point, and by means of the display time points of further layers, the display time points of subtitle layers are adjusted, so as to ensure that a user can view the display contents of further layers. The adjustment of a display time point of a subtitle layer can control the subtitle layer to be displayed at display time points of further layer and be displayed intermittently according to a predetermined display frequency, etc. For example, if the display time points of further layers are a-b, the further layers can be controlled to be displayed at a time point a-b every c times for a duration of d, thereby ensuring that a user can view displaying contents of further layer.

In conclusion, the method of subtitle displaying of embodiments of the present disclosure can also change the displaying state of the subtitle layer after the subtitle layer may cause occlusion of further layers to further ensure that the user can view the contents of the further layers, which enhances the flexibility of the display.

In order to implement the above embodiments, the present disclosure further provides an apparatus for subtitle displaying.

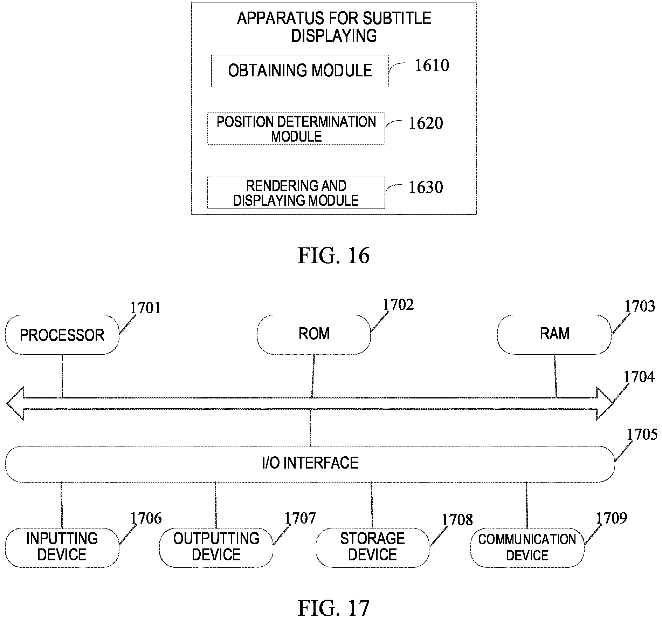

FIG. 16 is a schematic structural diagram of an apparatus for a subtitle displaying according to an embodiment of the present disclosure. The apparatus may be implemented by software and/or hardware, and may generally be integrated in an electronic device to display a caption. As shown in FIG. 16, the apparatus includes an obtaining module 1610, a position determining module 1620, and a rendering and displaying module 1630.

The obtaining module 1610 is configured to obtain a subtitle content corresponding to a currently played virtual reality video frame;

the position determining module 1620 is configured to determine a target spatial position in a virtual reality panoramic space based on a current line-of-sight direction of a user;

The rendering and displaying module 1630 is configured to render a subtitle layer at the target spatial position based on the subtitle content, and synchronously rendering the subtitle content in the subtitle layer.

The apparatus for subtitle displaying provided in the embodiments of the present disclosure can execute the method for subtitle displaying provided in any embodiment of the present disclosure, and has functional modules and beneficial effects for executing the method.

In order to implement the above embodiments, the present disclosure further provides a computer program product, comprising a computer program/instruction. When the computer program/instruction is executed by a processor, the method for subtitle displaying in the above embodiments is implemented.

FIG. 17 is a schematic structural diagram of an electronic device according to an embodiment of the present disclosure.

Referring now specifically to FIG. 17, there is shown a block diagram of an electronic device 1700 suitable for use in implementing embodiments of the present disclosure. The electronic device 1700 in the embodiment of the present disclosure may include, but is not limited to, a mobile terminal such as a mobile phone, a notebook computer, a digital broadcast receiver, a PDA (Personal Digital Assistant), a PAD (tablet computer), a PMP (Portable Multimedia Player), an in-vehicle terminal such as an in-vehicle navigation terminal, and the like, and a fixed terminal such as a digital TV, a desktop computer, and the like. The electronic device shown in FIG. 17 is only an example and should not impose any limitations on the functions and scope of use of the embodiments of the present disclosure.

As shown in FIG. 17, the electronic device 1700 may include a processing device (such as a central processing unit and a graphics processor) 1701, which may execute various appropriate actions and processing according to a program stored in a read-only memory (ROM) 1702 or a program loaded to a random access memory (RAM) 1703 from a storage device 1708. Various programs and data required during operation of the electronic device 1700 are also stored in the RAM 1703. The processing device 1701, the ROM 1702 and the RAM 1703 are connected with one another via a bus 1704. An input/output (I/O) interface 1705 is also connected to the bus 1704.

Generally, the following apparatuses may be connected to the I/O interface 1705: an input device 17017 including for example a touch screen, a touch pad, a keyboard, a mouse, a camera, a microphone, an accelerometer and a gyroscope; an output device 1707 including for example a liquid crystal display (LCD), a speaker and a vibrator; a storage device 1708 including for example a magnetic tape and a hard disk; and a communication device 1709. The communication device 1709 may allow wireless or wired communication between the electronic device 1700 and other devices for data exchange. Although the figure shows the electronic device 1700 having various devices, it should be understood that not all the devices shown are necessarily required to be implemented or provided. More or fewer devices may alternatively be implemented or provided.

In particular, according to the embodiments of the present disclosure, the process described above with reference to the flowcharts may be implemented as a computer software program. For example, an embodiment of the present disclosure provides a computer program product including a computer program carried on a non-transient computer-readable medium. The computer program includes a program code for executing the methods shown in the flowcharts. In such an embodiment, the computer program may be downloaded and installed from the network via the communication device 1709, or installed from the storage device 1708, or installed from the ROM 1702. The computer program, when executed by the processing unit 1701, causes the processing unit to execute the above functions defined in the methods of subtitle displaying according to the embodiments of the present disclosure.

It should be noted that the computer-readable medium according to the present disclosure may be a computer-readable signal medium or a computer-readable storage medium or any combination of the two. The computer-readable storage medium may be, for example, but is not limited to, an electrical, magnetic, optical, electromagnetic, infrared, or semiconductor system, apparatus, or device, or any combination thereof. More specific examples of the computer-readable storage medium include but are not limited to: an electrical connection with at least one wire, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium that contains or stores a program. The program may be used by or used in combination with an instruction execution system, apparatus, or device. However, in the present disclosure, the computer-readable signal medium may include a data signal propagated in baseband or as a part of a carrier wave, and computer-readable program code is carried therein. This propagated data signal may take many forms, including but not limited to electromagnetic signals, optical signals, or any suitable combination thereof. The computer-readable signal medium may also be any computer-readable medium other than the computer-readable storage medium. The computer-readable signal medium may send, propagate, or transmit the program used by or used in combination with the instruction execution system, apparatus, or device. The program code contained on the computer-readable medium may be transmitted by any suitable medium, including but not limited to, wire, optical cable, RF, etc., or any suitable combination thereof.

In some implementations, a client and server may communicate using any currently known or future developed network protocol such as HTTP (HyperText Transfer Protocol) and may interconnect with any form or medium of digital data communication (such as communication networks). Examples of communication networks include Local Area Networks (LANs), Wide Area Networks (WANs), the Internet (such as the Internet), and end-to-end networks (such as ad hoc end-to-end networks), as well as any network currently known or future developed.

The above-mentioned computer-readable medium may be included in the above-mentioned electronic device; it may also stand alone without being assembled into the electronic device.

The computer-readable medium carries one or more programs. When the one or more programs are executed by the electronic device, the electronic device is caused to: a subtitle content corresponding to a currently played virtual reality video frame is obtained, a target spatial position is determined in a virtual reality panoramic space based on a current line-of-sight direction of a user, a subtitle layer is rendered in the target spatial position based on the subtitle content, and the subtitle content is synchronously rendered in the subtitle layer. After the subtitle content is determined, the position of the subtitle content rendered in the virtual reality space is determined following the line-of-sight direction of the user, so that the viewing experience of the user is improved on the basis of realizing the displaying the subtitle content, and the subtitle content is rendered at a corresponding position, so that a subtitle layer independent of a virtual reality video frame as a carrier for displaying the subtitle content, the displaying distortion of the subtitle content is avoided, and the displaying effect of the subtitle content is improved.

The electronic device may write the computer program code for performing the operations of the present disclosure may be written in one or more programming languages or a combination thereof, which include but are not limited to object-oriented programming languages Java, Smalltalk, C++, and conventional procedural programming languages such as "C" or similar programming languages. The program codes may be executed completely on a user computer, partially on a user computer, as an independent package, partially on a user computer and partially on a remote computer, or completely on a remote computer or server. In cases involving a remote computer, the remote computer may be connected to a user computer through any type of network, including a local area network (LAN) or a wide area network (WAN), or may be connected to an external computer (for example, through the Internet by using an Internet service provider).

The flowcharts and the block diagrams in the drawings illustrate system architectures, functions and operations that may be implemented based on the system, method, and computer program product according to various embodiments of the present disclosure. In this regard, each block in the flowcharts or the block diagrams can represent one module, a program segment or a part of a code, and the module, the program segment or the part of the code includes at least one executable instruction for implementing specific logic functions. It should also be noted that, in some alternative implementations, the functions noted in the blocks may also occur in a sequence different from those illustrated in the drawings. For example, two consecutive blocks may be executed substantially in parallel, and may sometimes be executed in an opposite order, depending on the functions involved. It should also be noted that each block in the block diagrams and/or the flowcharts, and combinations of the blocks in the block diagrams and/or the flowcharts can be implemented in a dedicated hardware-based system that performs the specified functions or operations, or can be implemented by the combination of dedicated hardware and computer instructions.

The units involved in the embodiments described in this disclosure can be implemented in software or hardware. Herein, the name of the unit does not constitute a limitation on the unit itself in some cases.

The functions described above herein may be at least partially performed by one or more hardware logic components. For example, non-restrictively, example types of hardware logic components that may be used include: a field programmable gate array (FPGA), an application-specific integrated circuit (ASIC), an application-specific standard parts (ASSP), a system-on-chip (SOC), a complex programmable logic device (CPLD), and the like.

In the context of the present disclosure, the machine-readable medium may be a tangible medium that may contain or store a program used by or used in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination thereof.

The above description is only for the preferred embodiments of the present disclosure and an explanation of the technical principles used. Those skilled in the art should understand that the scope involved in the present disclosure is not limited to technical solutions formed by specific combinations of the aforementioned technical features, and should also cover other technical solutions formed by any combinations of the aforementioned technical features or their equivalent features without departing from the disclosed concept. For example, a technical solution is formed by replacing the above features with (but not limited to) technical features with similar functions disclosed in this disclosure.

Furthermore, although operations are depicted in a specific order, this should not be understood as requiring that these operations be performed in the specific order shown or performed in a sequential order. In certain environments, multitasking and parallel processing may be advantageous. Likewise, although several specific implementation details are included in the above discussion, these should not be interpreted as limitations on the scope of this disclosure. Certain features described in the context of individual embodiments may also be combined to be implemented in a single embodiment. On the contrary, various features described in the context of a single embodiment may also be implemented separately or in any suitable sub combination in multiple embodiments.

Although the present subject matter has been described in language specific to structural features and/or methodological logical actions, it should be understood that the subject matter defined in the attached claims may not necessarily be limited to the specific features or acts described above. On the contrary, the specific features and actions described above are only example forms of implementing the claims.

## Claims

1. A method of subtitle displaying, comprising:

   obtaining a subtitle content corresponding to a currently played virtual reality video frame;
   determining a target spatial position in a virtual reality panoramic space based on a current line-of-sight direction of a user; and
   rendering a subtitle layer at the target spatial position based on the subtitle content, and synchronously rendering the subtitle content in the subtitle layer.

2. The method of claim 1, wherein obtaining the subtitle content corresponding to the currently played virtual reality video frame comprises:

performing a speech recognition processing on an audio stream corresponding to the currently played virtual reality video frame to obtain the subtitle content; or

querying a predetermined database to obtain a subtitle content corresponding to the currently played virtual reality video frame.

3. The method of claim 1, wherein the determining the target spatial position in the virtual reality panoramic space based on the current line-of-sight direction of the user comprises:

determining a central point position of the virtual reality panoramic space, and obtaining a predetermined radius distance; and

extending the current line-of-sight direction of the user, from the central point position according to the predetermined radius distance to a position, and taking the position as the target spatial position.

4. The method of claim 1, wherein determining the target spatial position in the virtual reality panoramic space based on the current line-of-sight direction of the user comprises:

obtaining a historical space position corresponding to a subtitle content of a previous frame displayed in the virtual reality panoramic space;

obtaining a line-of-sight change information between the current line-of-sight direction of the user relative to a line-of-sight direction for viewing the previous frame; and

determining the target spatial position based on the line-of-sight change information and the historical spatial position.

5. The method of claim 4, wherein obtaining line-of-sight change information between the current line-of-sight direction of the user relative to the line-of-sight direction for viewing the previous frame comprises:

obtaining a horizontal axis rotation angle of a camera in a virtual reality device worn by the user relative to the previous frame in a horizontal direction,

wherein the horizontal axis rotation angle is change information of the user from a horizontal line-of-sight direction for viewing the previous frame to a horizontal line-of-sight direction for viewing a current frame.

6. The method of claim 1, wherein rendering the subtitle layer at the target spatial position based on the subtitle content comprises:

obtaining a displaying quantity of the subtitle content; and

rendering the subtitle layer that matches the displaying quantity.

7. The method of claim 6, wherein rendering the subtitle layer that matches the displaying quantity comprises: determining a subtitle real-time width and a subtitle real-time height based on the displaying quantity, a predetermined unit subtitle width, and a predetermined unit subtitle height;

in response to a width change of the subtitle real-time width, rendering a real-time subtitle layer width that matches the subtitle content based on a layer width of a unit subtitle and the subtitle real-time width ; and/or

in response to a height change of the subtitle real-time height, rendering a real-time subtitle layer height that matches the subtitle content based on a predetermined layer height of a unit subtitle and the subtitle real-time height.

8. The method of claim 7, wherein determining the subtitle real-time width and the subtitle real-time height based on the displaying quantity, the predetermined unit subtitle width, and the predetermined unit subtitle height comprises:

determining whether the displaying quantity is greater than a predetermined subtitle quantity threshold in a width direction;

in response to the displaying quantity being greater than the predetermined subtitle quantity threshold, determining the subtitle real-time width based on the predetermined subtitle quantity threshold and the unit subtitle width; and

determining a subtitle row number based on the predetermined subtitle quantity threshold and the displaying quantity, and determining the subtitle real-time height based on the subtitle row number and the unit subtitle height.

**9.** The method of claim 8, further comprising:

in response to the displaying quantity not being greater than the predetermined subtitle quantity threshold, determining the subtitle real-time width based on the unit subtitle width and the displaying quantity; and determining the unit subtitle height as the subtitle real-time height.

**10.** The method of any of claims 1 to 9, further comprising:

in response to a detection that a further layer is displayed in the virtual reality panoramic space, identifying displaying state information of the further layer; and adjusting the displaying state information of the subtitle layer based on the displaying state information of the further layer.

**11.** The method of claim 10, wherein the displaying state information comprises a space position for display, and adjusting the displaying state information of the subtitle layer based on the displaying state information of the further layer comprises:

determining whether a reference spatial position where the further layer is located and the target spatial position satisfy a predetermined occlusion condition; in response to the occlusion condition being satisfied, determining a target moving position and/or a target layer displaying size of the subtitle layer, wherein the subtitle layer corresponding to the target moving position and/or the target layer displaying size and the further layer do not satisfy the occlusion condition; and displaying the subtitle layer based on the target moving position and/or the target layer displaying size.

**12.** The method of claim 10, wherein the method further comprises: before adjusting the displaying state information of the subtitle layer based on the displaying state information of the further layer, determining a layer level of the further layer, and determining that the layer level is higher than a predetermined level threshold.

**13.** The method of claim 11, wherein determining whether the reference spatial position where the further layer is located and the target spatial position satisfy the predetermined occlusion condition comprises:

identifying a first central point position of the further layer on a plane perpendicular to the line-of-sight direction based on the reference spatial position; identifying a second central point position of the subtitle layer on the plane perpendicular to the line-of-sight direction based on the target spatial position; and determining whether a position difference value between the first central point position and the second central point position is less than a predetermined distance threshold, wherein determining that the predetermined occlusion condition is satisfied in response to the position difference value being less than the predetermined distance threshold.

**14.** The method of claim 11, wherein determining whether the reference spatial position where the further layer is located and the target spatial position satisfy the predetermined occlusion condition comprises:

determining an area of an overlapping region between the subtitle layer and the further layer on a plane perpendicular to the line-of-sight direction based on the reference spatial position and the target spatial position; calculating an area ratio of the area of an overlapping region to a layer area of the further layer; and determining whether the area ratio is greater than a predetermined area ratio threshold, wherein determining that the predetermined occlusion condition is satisfied in response to the area ratio being greater than the predetermined area ratio threshold.

**15.** The method of claim 11, wherein determining the target moving position and/or the target layer displaying size of the subtitle layer comprises:

determining a first height information for an upper edge line of the further layer based on the reference spatial position, determining a second height information for a lower edge line of the subtitle layer based on the first height information, wherein the second height information is greater than or equal to the first height information,

determining the target moving position based on the second height information; and/or,
determining a reference displaying size of the further layer based on the reference spatial position, and determining the target layer displaying size of the subtitle layer based on the reference displaying size.

16. The method of claim 11, further comprising:
in response to a detection of an instruction for disabling displaying of the further layer, controlling the subtitle layer to move to the target spatial position for display.

17. The method of any of claims 1 to 9, further comprising:
performing background addition displaying processing on the subtitle layer.

18. The method of claim 17, wherein performing the background addition displaying processing on the subtitle layer comprises:

adding a backlight sub-layer and a quantum dot matrix sub-layer under the subtitle layer; and/or
rendering a lighting animation on the subtitle layer.

19. An apparatus for subtitle displaying, comprising:

an obtaining module configured to obtain a subtitle content corresponding to a currently played virtual reality video frame;
a position determination module configured to determine a target spatial position in a virtual reality panoramic space based on a current line-of-sight direction of a user; and
a rendering and displaying module configured to render a subtitle layer at the target spatial position based on the subtitle content, and synchronously rendering the subtitle content in the subtitle layer.

20. An electronic device, comprising:

a processor;
a memory configured to store executable instructions for the processor;
the processor configured to read the executable instructions from the memory and execute the executable instructions to implement the method of subtitle displaying of any of claims 1 to 18.

21. A computer readable storage medium, wherein the computer readable storage medium stores a computer program, and the computer program configured to execute the method of subtitle displaying of any of claims 1 to 18.

OBTAIN A SUBTITLE CONTENT CORRESPONDING TO A CURRENTLY PLAYED VIRTUAL REALITY VIDEO FRAME — 101

DETERMINE A TARGET SPATIAL POSITION IN A VIRTUAL REALITY PANORAMIC SPACE BASED ON A CURRENT LINE-OF-SIGHT DIRECTION OF A USER — 102

RENDER A SUBTITLE LAYER AT THE TARGET SPATIAL POSITION BASED ON THE SUBTITLE CONTENT, AND SYNCHRONOUSLY RENDER THE SUBTITLE CONTENT IN THE SUBTITLE LAYER — 103

FIG. 1

TARGET SPATIAL POSITION

LINE-OF-SIGHT DIRECTION

LINE-OF-SIGHT DIRECTION

FIG. 2

BACKLIGHT SUB-LAYER

QUANTUM
DOT MATRIX
SUB-LAYER

FIG. 3

SHOWN HERE IS

SHOWN HERE IS THE
FIRST

SHOWN HERE IS THE FIRST
ROW OF TEXT

......

SHOWN HERE IS THE FIRST ROW OF
SUBTITLE CONTENT

FIG. 4

SHOWN HERE IS THE FIRST ROW OF SUBTITLE CONTENT

SHOWN HERE IS THE FIRST ROW OF SUBTITLE CONTENT
SHOWN HERE IS THE SECOND ROW OF SUBTITLE CONTENT

......

SHOWN HERE IS THE FIRST ROW OF SUBTITLE CONTENT
SHOWN HERE IS THE SECOND ROW OF SUBTITLE CONTENT
SHOWN HERE IS THE THIRD ROW OF SUBTITLE CONTENT
SHOWN HERE IS THE FOURTH ROW OF SUBTITLE CONTENT
SHOWN HERE IS THE FIFTHLY ROW OF SUBTITLE CONTENT
SHOWN HERE IS THE SIXTHLY ROW OF SUBTITLE CONTENT

FIG. 5

SHOWN HERE IS THE FIRST ROW OF SUBTITLE CONTENT
SHOWN HERE IS THE SECOND ROW OF SUBTITLE CONTENT
SHOWN HERE IS THE THIRD ROW OF SUBTITLE CONTENT
SHOWN HERE IS THE FOURTH ROW OF SUBTITLE CONTENT
SHOWN HERE IS THE FIFTHLY ROW OF SUBTITLE CONTENT

SHOWN HERE IS THE SIXTHLY ROW

## FIG. 6

DETERMINE A CENTRAL POINT POSITION OF THE VIRTUAL REALITY PANORAMIC SPACE, AND OBTAIN A PREDETERMINED RADIUS DISTANCE — 701

EXTEND THE CURRENT LINE-OF-SIGHT DIRECTION OF THE USER, FROM THE CENTRAL POINT POSITION ACCORDING TO THE PREDETERMINED RADIUS DISTANCE TO A POSITION, AND TAKE THE POSITION AS THE TARGET SPATIAL POSITION — 702

## FIG. 7

FIG. 8

| OBTAIN A HISTORICAL SPACE POSITION CORRESPONDING TO A SUBTITLE CONTENT OF A PREVIOUS FRAME DISPLAYED IN THE VIRTUAL REALITY PANORAMIC SPACE | 901 |

| OBTAIN A LINE-OF-SIGHT CHANGE INFORMATION BETWEEN THE CURRENT LINE-OF-SIGHT DIRECTION OF THE USER RELATIVE TO A LINE-OF-SIGHT DIRECTION FOR VIEWING THE PREVIOUS FRAME | 902 |

| DETERMINE THE TARGET SPATIAL POSITION BASED ON THE LINE-OF-SIGHT CHANGE INFORMATION AND THE HISTORICAL SPATIAL POSITION | 903 |

FIG. 9

FIG. 10

FIG. 11

VIEWING
REGION

SUBTITLE LAYER

FURTHER LAYER

FIG. 12

| DETERMINE WHETHER A REFERENCE SPATIAL POSITION WHERE THE FURTHER LAYER IS LOCATED AND THE TARGET SPATIAL POSITION SATISFY A PREDETERMINED OCCLUSION CONDITION | 1301 |

| IN RESPONSE TO THE OCCLUSION CONDITION IS SATISFIED, DETERMINE A TARGET MOVING POSITION AND/OR A TARGET LAYER DISPLAYING SIZE OF THE SUBTITLE LAYER, WHEREIN THE SUBTITLE LAYER CORRESPONDING TO THE TARGET MOVING POSITION AND/OR THE TARGET LAYER DISPLAYING SIZE AND THE FURTHER LAYER DO NOT SATISFY THE OCCLUSION CONDITION | 1302 |

| DISPLAY THE SUBTITLE LAYER BASED ON THE TARGET MOVING POSITION AND/OR THE TARGET LAYER DISPLAYING SIZE | 1303 |

FIG. 13

FURTHER LAYER          SUBTITLE LAYER                    SUBTITLE LAYER

MOVE

FURTHER LAYER

## FIG. 14A

SUBTITLE LAYER                    SUBTITLE LAYER

MOVE

FURTHER LAYER

## FIG. 14B

FURTHER LAYER          SUBTITLE LAYER

FURTHER LAYER

ADJUST DISPLAYING SIZE                    SUBTITLE LAYER

## FIG. 15

APPARATUS FOR SUBTITLE
DISPLAYING

OBTAINING MODULE — 1610

POSITION DETERMINATION
MODULE — 1620

RENDERING AND
DISPLAYING MODULE — 1630

FIG. 16

PROCESSOR 1701

ROM 1702

RAM 1703

1704

1705

I/O INTERFACE

INPUTTING
DEVICE 1706

OUTPUTTING
DEVICE 1707

STORAGE
DEVICE 1708

COMMUNICATION
DEVICE 1709

FIG. 17

## INTERNATIONAL SEARCH REPORT

| | |
|---|---|
| International application No. | |
| | **PCT/CN2023/091203** |

**A.    CLASSIFICATION OF SUBJECT MATTER**

H04N 21/43(2011.01)i

According to International Patent Classification (IPC) or to both national classification and IPC

**B.    FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNTXT, CNKI, VEN, ENTXT, WPABS: 字幕, 显示, 虚拟现实, 视频, 帧, 视线, 全景, 空间, 位置, 渲染, 图层, 同步; subtitle, display, virtual, reality, vr, video, frame, sight, panorama, space, position, location, render, layer, synchronize

**C.    DOCUMENTS CONSIDERED TO BE RELEVANT**

| Category* | Citation of document, with indication, where appropriate, of the relevant passages | Relevant to claim No. |
|---|---|---|
| X | CN 107613405 A (FUZHOU ROCKCHIP ELECTRONICS CO., LTD.) 19 January 2018 (2018-01-19)<br>description, paragraphs 55-79 | 1-21 |
| A | CN 104918097 A (WUXI TVMINING MEDIA SCIENCE & TECHNOLOGY CO., LTD.) 16 September 2015 (2015-09-16)<br>entire document | 1-21 |
| A | CN 106412718 A (LETV HOLDINGS (BEIJING) CO., LTD. et al.) 15 February 2017 (2017-02-15)<br>entire document | 1-21 |
| A | CN 112019772 A (ZHONGTU YUNCHUANG INTELLIGENT TECHNOLOGY (BEIJING) CO., LTD.) 01 December 2020 (2020-12-01)<br>entire document | 1-21 |
| A | EP 3493028 A1 (THOMSON LICENSING) 05 June 2019 (2019-06-05)<br>entire document | 1-21 |

☐ Further documents are listed in the continuation of Box C.          ☑ See patent family annex.

| | |
|---|---|
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **25 June 2023** | **25 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/091203**

| Patent document cited in search report | | | Publication date (day/month/year) | Patent family member(s) | Publication date (day/month/year) |
|---|---|---|---|---|---|
| CN | 107613405 | A | 19 January 2018 | None | |
| CN | 104918097 | A | 16 September 2015 | None | |
| CN | 106412718 | A | 15 February 2017 | None | |
| CN | 112019772 | A | 01 December 2020 | None | |
| EP | 3493028 | A1 | 05 June 2019 | None | |

Form PCT/ISA/210 (patent family annex) (July 2022)

**REFERENCES CITED IN THE DESCRIPTION**

**Patent documents cited in the description**

- CN 202210698095